# EUROPÄISCHE PATENTSCHRIFT

(11) **EP 0 329 121 B1**
(45) Veröffentlichungstag und Bekanntmachung des Hinweises auf die Patenterteilung: **21.09.1994**
(21) Anmeldenummer: 89102617.1
(22) Anmeldetag: 16.02.1989
(51) Int. Cl.: G03B 3/12, G03B 17/56, H04N 5/232, G05D 1/10

(54) **Bedienungsvorrichtung zur Fernsteuerung von Kameras und dergleichen Geräten**
Control element for the remote control of cameras and related apparatuses
Bouton de commande pour la télécommande de caméras et de dispositifs analoques

(30) Priorität: 16.02.1988 DE 3804783
(43) Veröffentlichungstag der Anmeldung: 23.08.1989
(73) Patentinhaber: INGENIEURBÜRO KARLHEINZ LEDERER, 93051 Regensburg (DE)
(72) Erfinder: Lederer, Karlheinz, D-8400 Regensburg (DE)
(74) Vertreter: Wasmeier, Alfons, Dipl.-Ing.

(56) Entgegenhaltungen:
- EP-A- 0 095 763
- DE-A- 2 821 794
- DE-B- 2 544 728
- FR-A- 1 537 663
- US-A- 2 397 477
- US-A- 4 012 015
- US-A- 4 584 510

## Beschreibung

Die Erfindung bezieht sich auf eine Vorrichtung nach dem Oberbegriff des Anspruches 1.

Zur Fernsteuerung von Kameras im Bereich der Studio- und Sicherheitstechnik werden Mehrfach-Bedienvorrichtungen verwendet, deren Funktionsbetätigung eine dieser Bewegungsrichtung entsprechende Betätigung eines Schwenk-Neige-Kopfes der Kameraaufnahme ergibt. Derartige Bedienungsvorrichtungen sind beispielsweise der Hebel eines Windrosenschalters, der nach vorne gedrückt wird, wenn der Schwenk-Neige-Kopf nach oben bewegt werden soll, und der nach rückwärts gezogen wird, wenn der Schwenk-Neige-Kopf nach unten bewegt werden soll. Zusätzlich sind zur Verstellung des Objektivs Bedienelemente erforderlich, die das Objektiv in Richtung Tele- und Weitwinkel verstellen sowie eine Änderung der Schärfe im Nah- und Fernbereich bewirken. Derartige Bedienelemente können anstatt in Form eines Windrosenschalters mit Betätigungshebel auch als Tastaturschalter ausgebildet sein.

Bekannte Mehrfach-Bedienelemente haben den Nachteil, daß die ausgeführten Funktionen nicht oder zumindest nicht ausreichend proportional zu der Anordnung der Funktionsbedienung sind, d.h. daß z.B. für eine Seitwärtsbewegung des Schwenk-Neige-Kopfes nach links das Bedienelement in Form eines Joy-Sticks nicht in gleicher Weise nach links zu bewegen ist bzw. z.B. die Geschwindigkeit, mit der der Schalthebel bewegt wird, nicht proportional der erzielten Bewegung des Schwenk-Neige-Kopfes ist, bzw. bei einer Bedienungstastatur dem Bedienenden nur eine Ein-Aus-Schaltfunktion zur Verfügung steht, die Geschwindigkeit, mit der der Kopf bewegt wird, aber durch Betätigen dieses Bedienelementes nicht beeinflußt werden kann.

Ein entscheidender weiterer Nachteil bekannter Mehrfach-Bedienelemente ist darin zu sehen, daß zur Bewegungssteuerung von Objektiv und Schwenk-Neige-Kopf zwei getrennte und voneinander unabhängige Bedienelemente erforderlich sind, so daß die Ausführung schneller Funktionen, wie sie z.B. für Hochsicherheitsanforderungen benötigt werden, nicht oder nur schwierig möglich ist und die Bedienvorrichtung somit nicht optimal arbeitet.

Aus EP-A 0 095 763 ist eine Bedienvorrichtung bekannt, bei der mit Hilfe eines Steuerknüppels in Einhandbedienung ein Basisteil vorwärts und rückwärts verschoben und der Steuerknüppel relativ zum Basisteil geschwenkt werden kann. Das Basisteil weist ferner eine etwa parallel zum Steuerhebel verlaufende Säule auf, die seitlich eine Mehrzahl von übereinander angeordneten, mit den einzelnen Fingern betätigbaren Bedienknöpfen besitzt. Zusätzlich sind auf der der Säule zugewandten Seite des Basisteils entsprechende Bedienknöpfe vorgesehen. Des weiteren ist der Steuerknüppel quer zur Führungsbahn und quer zu seiner Längsachse verschwenkbar. Damit ist eine ergonomisch günstige Steuerung der möglichen Steuerbewegungen erzielbar.

DE-A 28 21 794 zeigt eine Vorrichtung zur Fernbedienung einer Kamerasteuerung in Form einer flugtauglichen Fernsehanordnung, bei der die Fernsehkamera in einem Bügel so montiert ist, daß sie sich in einer Links-Rechts-Drehung und um eine parallel zur Flugzeuglängsachse verlaufende Achse drehen kann. Des weiteren ist der Bügel so montiert, daß er auf- und abwärts sowie um eine senkrecht zur Flugzeugachse verlaufende Achse drehbar ist.

In der DE-B 25 44 728 ist ein Bedienorgan in Form eines Drehhandgriffes beschrieben und dargestellt, das zum Verstellen eines Objektivs und zum Fokussieren des Objektivs durch Drehen eines Bedienelementes dient. Dabei wird beispielsweise das Objektiv durch Fernsteuerung über Kabel von dem am Schwenkhebel befestigten Bedienorgan aus gesteuert.

Aufgabe der Erfindung ist es, eine Vorrichtung zum Steuern von gattungsgemäßen Geräten, insbesondere für Kameras mit beweglichem Schwenk-Neige-Kopf und verstellbarem Objektiv so zu verbessern, daß die Bewegungen von Objektiv und Schwenk-Neige-Kopf mit ein und derselben Bedienvorrichtung steuerbar sind, daß die Betätigung der einzelnen Elemente der Bedienvorrichtung eine proportionale Steuerbewegung der Kamera oder dgl. ergibt, und daß die durch die Steuerung vorgenommenen Bewegungen der Kamera und die Bewegungen der Bedienungsperson aufeinander abgestimmt und dem natürlichen Bewegungsablauf entsprechend ausgeführt werden.

Diese Aufgabe wird gemäß der Erfindung mit den Merkmalen des Kennzeichens des Anspruches 1 gelöst. Weitere Ausgestaltungen der Erfindung sind Gegenstand der Unteransprüche.

Eine derartige Multifunktions-Bedienvorrichtung eignet sich vorzugsweise zur Fernsteuerung von Kameras im Studio-und Sicherheitstechnikbereich, bei dem es auf eine besonders einfache, schnelle, fehlersichere und effektive Bedienung ankommt. Insbesondere bei der Sicherheitsüberwachung ist ausschlaggebend, daß die Kamera bei plötzlich auftretenden Zuständen und in ungewöhnlichen Situationen schnell und sicher bedient werden kann, damit die Bedienungsperson die auszuführenden Funktions-Betätigungen mit Hilfe einer einzigen Bedienvorrichtung und die einzelnen Bedienelemente mit einer Hand so betätigen kann, daß die durch die Steuerung ausgeführten Bewegungen der Kamera analog den Bewegungen sind, die die Bedienungsperson an der Bedienvorrichtung vornimmt. Damit werden die Bewegungen aufeinander abgestimmt und die Ausführung dieser Bewegungen stellt für die Bedienungsperson den natürlichen Bewegungsablauf dar, der bei plötzlich auftretenden Situationen mehr oder weniger intuitiv bzw. automatisch ausgeführt wird.

So wird z.B. zum Bewegen des Schwenk-Neige-Kopfes nach unten bzw. oben die Bedienvorrichtung bzw. der Bediengriff analog nach unten gedrückt bzw. nach oben gezogen; im Gegensatz hierzu wird bei herkömmlichen, vergleichbaren Vorrichtungen zur Bewegung des Schwenk-Neige-Kopfes nach unten bzw. nach oben der Steuerhebel nach rückwärts bzw. nach vorne gedrückt. Eine Bewegung des Hebels nach vorne entspricht bei der Bedienvorrichtung nach der Erfindung einem Herangehen an das Objekt, d.h. ein Verstellen des Objektivs in Richtung Tele, während eine umgekehrte Bewegung des Hebels ein Verstellen des Objektives im Bereich Weitwinkel entspricht. Eine Drehung des Hebels um seine eigene Achse (nach links oder nach rechts) bewirkt eine Verstellung der Schärfe in der einen oder in der anderen Richtung.

Für eine derartige Ausführungsform der Bedienvorrichtung ist der Hebel um den Gelenkpunkt kippbar und in seiner Achse verschiebbar ausgebildet, wobei bei der Hebel-Auslenkung bzw. -Verstellung in der jeweiligen Verstellrichtung Kontakte betätigt werden, die Stromkreise für den Antrieb der Bewegung der Plattform bzw. des Schwenk-Neige-Kopfes ergeben. Das untere Ende des Hebels ist dabei für Auslenkungen gelenkig gelagert, während zum Heben und Senken des Hebels in seiner Längsachse die gelenkige Lagerung mit angehoben wird und bei dieser Bewegung der untere Teil des Hebels in einer Führung angeordnet ist und in dieser gleitet. Der Hebel wird zur jeweils gewünschten Kontaktgabe in die entsprechende Richtung ausgelenkt bzw. bewegt; nach Kontaktgabe bzw. nach beendeter Bewegung bzw. Auslenkung wird der Hebel selbsttätig durch eine Federanordnung wieder in seine Ausgangsstellung, d.h. in die Mittelstellung bzw. Nullposition zurückgeführt.

Bei einer anderen Ausführungsform der Erfindung ist der Griff des Steuerhebels z.B. als kugelförmiger Kopf oder als Miniatur-Kamera-Nachbildung ausgebildet, der bzw. die auf einem Arm bzw. Schaft so befestigt ist, daß er um eine Kugelkopfachse senkrecht zur Armachse schwenkbar ist, wodurch ein Neigen des Schwenk-Neige-Kopfes im und gegen den Uhrzeigersinn in Bezug auf diese Achse erzielt wird. Der Kugelkopf weist beispielsweise einen Schalter, z.B. einen Druckknopfschalter auf, der in den beiden unterschiedlichen Schaltstellungen das Zoomen oder Fokussieren steuert. Der Arm ist in einem auf der Aufnahmeplatte (parallel zur Ebene der Schwenkachse) ausgebildeten Führungsbahn verschiebbar, wodurch die Funktionen Zoomen Weitwinkel oder Fokussieren Nahe (in der einen Richtung) und Zoomen Tele oder Fokussieren Unendlich (in der entgegengesetzten Richtung) gesteuert werden. Die Führungsbahn ist vorzugsweise in der Ebene der Aufnahmeplatte drehbar so gelagert, daß ein Verdrehen des Schaftes mit Kugelkopf in der Ebene der Aufnahmeplatte erreicht wird und damit die Steuerfunktionen Schwenken im Uhrzeigersinn und im Gegenuhrzeigersinn durchgeführt werden.

Bei einer speziellen Ausführungsform der Erfindung ist der Griff des Steuerhebels als stabförmiger Handgriff bzw. Drehgriff ausgebildet, der an seinem Griffumfang einen in radialer Richtung betätigbaren Druckschalter, anstelle des Druckknopfschalters nach der vorstehend geschilderten Ausführungsform aufweist, und der an einem Schaft befestigt ist, welcher in einer Führungsbahn stehend verschiebbar ist. Der Drehgriff ist zum Neigen der Kamera um seine Längsachse drehbar ausgebildet, zum Schwenken der Kamera um die Schaftachse drehbar, und zum Zoomen des Objektivs in einer geradlinigen Führungsnut horizontal verschiebbar. Zum Scharfstellen des Objektivs bei stationär gehaltenem Drehgriff wird der Druckschalter mit Zeigefinger und/oder Mittelfinger betätigt. Mit einem derartigen Vierfach-Funktions-Handgriff kann die Kameraeinheit simultan und außerordentlich reaktionsschnell ferngesteuert werden, wobei die Geschwindigkeiten der Fernsteuerfunktionen variabel sind. Eine solche Vierfach-Funktions-Einheit dient zur gleichzeitigen Fernsteuerung von Kamera-Schwenken, -Neigen, -Zoomen, -Scharfstellen. Der Handgriff besitzt eine ergonomische Formgebung, die ein besonders bequemes und zweckmäßiges Betätigen ermöglicht.

Mit einer Anordnung nach der Erfindung läßt sich das relativ komplizierte und aufwendige Heben und Senken des Hebels vermeiden. Ferner werden mit einer derartigen Ausgestaltung die auszuführenden Bewegungen Drehen, Schwenken und geradliniges Verschieben entsprechend den tatsächlich gewünschten Bewegungen simuliert durchgeführt, so daß der die Bedienungsvorrichtung Bedienende auf sehr einfache Weise die beabsichtigten Funktionsbewegungen mit den tatsächlich durchgeführten Bewegungen koordinieren kann und damit eine besonders schnelle Umsetzung der auszuführenden Bewegungen möglich ist, während gleichzeitig Bedienfehler soweit wie möglich ausgeschaltet werden können.

Bei herkömmlichen, vergleichbaren Bedienvorrichtungen ist nicht gewährleistet, daß die ausgeführten Funktionen stets proportional der Bedienvorrichtung sind. Vorliegende Erfindung ermöglicht jedoch, variable und proportionale Funktionsgeschwindigkeiten zu erzielen, indem sämtliche Hebelfunktionen über Potentiometer ausgeführt werden, wobei der Weg der einzelnen Hebelbetätigungen proportional der ausgeführten Geschwindigkeit ist, d.h., daß z.B. bei einer geringen Bewegung des Steuerhebels nach links die Winkelgeschwindigkeit des Schwenk-Neige-Kopfes nach links relativ gering ist. Wird der Winkelweg bzw. Ausschlag nach links verstärkt, erhöht sich die Bewegungsgeschwindigkeit des Schwenk-Neige-Kopfes nach links entsprechend. Das gleiche gilt für die Fernbedienung des Objektivs. Wird entsprechend der Steuerhebel nur eine geringe Strecke nach vorne gedrückt, wird eine langsame Änderung des Objektivs in Richtung Tele erzielt, wird der Hebel weiter nach vorne gedrückt, ergibt dies eine entsprechend schnellere Änderung der Bewegung des Objektivs.

Nachstehend wird die Erfindung in Verbindung mit der Zeichnung anhand zweier Ausführungsbeispiele erläutert. Es zeigt:
Fig. 1 eine erste Ausführungsform der Erfindung,
Fig. 2 eine zweite, bevorzugte Ausführungsform der Erfindung in Schrägansicht,
Fig. 3 eine Seitenansicht des Handgriffes nach Fig. 2 in schematischer Darstellung mit gestrichelt dargestellter Betätigungshand,
Fig. 4 eine um 90° verdrehte Ansicht der Darstellung nach Fig. 3, und
Fig. 5 eine schematische Darstellung einer Anordnung zur Erzielung einer variablen Funktionsgeschwindigkeit.

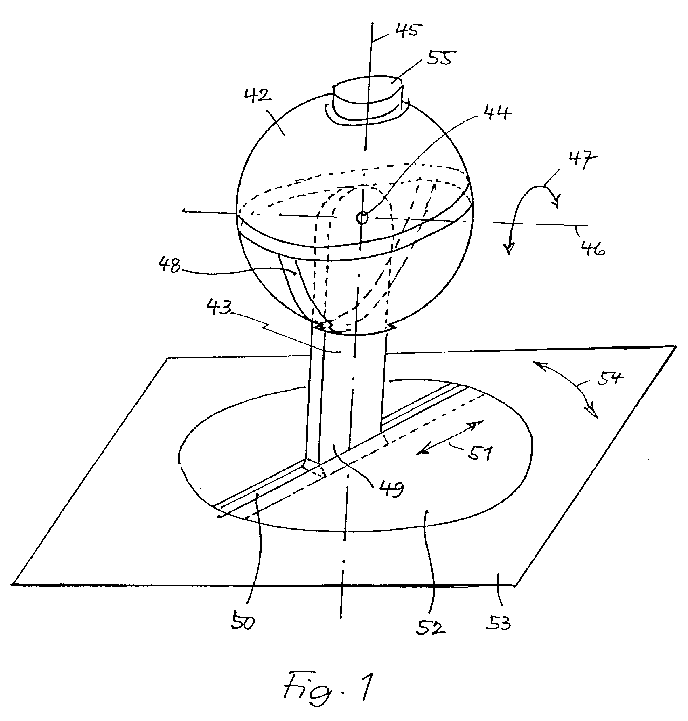

Bei der Ausführungsform nach Fig. 1 besteht die Bedienvorrichtung aus einem kugelförmigen Kopf 42, der mit einem Schaft bzw. Arm 43 gelenkig verbunden ist. Der Arm 43 ist mit seinem oberen Ende so in die Kugel 42 eingesetzt, daß die Kugel in der Lagerstelle 44 an der Schnittstelle zwischen der Längsachse 45 des Schaftes 43 und einer darauf senkrecht stehenden Kugelachse 46 angeordnet ist Die Kugel 42 ist um die Achse 46 der Lagerstelle 44 in Pfeilrichtung 47 verschwenkbar und weist eine schlitzförmige Aussparung 48 auf, damit die Kugel um den oberen Teil des Armes 43 geschwenkt werden kann. Das untere Ende 49 des Schaftes 43 ist in einer geradlinigen Schiebebahn 50 in Pfeilrichtung 51 verschiebbar und hierzu mit einem Führungsschuh oder dergl. versehen. Die Schiebebahn 50 ist in einer Platte 52 ausgebildet, die in einer Träger- oder Aufnahmeplatte 53 drehbar in Pfeilrichtung 54 angeordnet ist. Auf der Kugel ist ein Druckknopfschalter 55 angeordnet.

Ein Verschwenken des Kugelkopfes 42 um die Achse 46 ergibt ein Neigen des Schwenk-Neige-Kopfes im Uhrzeigersinn oder im Gegenuhrzeigersinn (Doppelpfeil 47), ein Verschieben des Armes 43 in der Schiebebahn 50, ein Zoomen Weitwinkel bzw. Zoomen Tele oder ein Fokussieren Nahe bzw. ein Fokussieren Ferne oder Unendlich (Pfeil 51), wobei hierbei der Arm 43 mit Kugelkopf linear verschoben wird; ein Drehen der Platte 52 mit Arm und Kugel in der Schiebebahn ergibt ein Drehen im Uhrzeigersinn und im Gegenuhrzeigersinn, was ein Schwenken des Schwenk-Neige-Kopfes nach links oder rechts ergibt (Doppelpfeil 54).

Eine schematische Darstellung der Steuerung der Steuerhebelfunktionen über Potentiometer zur Erzielung variabler Funktionsgeschwindigkeiten zeigt Fig. 5. Der Hebelausschlag wird hierbei proportional auf ein Potentiometer in der Weise übertragen, daß bei geringer Auslenkung des Hebels die Winkelgeschwindigkeit des Schwenk-Neige-Kopfes in der entsprechenden Richtung gering ist und bei Verstärkung des Ausschlages die Winkelgeschwindigkeit des Kopfes zunimmt, indem der Abgriff am Potentiometer entsprechend durch den Hebelausschlag verschoben und damit bei stärkerer Auslenkung der eingeschaltete Widerstand verkleinert wird. 36 bezeichnet den beweglichen Kontakt, 37 den Fest Kontakt, 38 das Potentiometer mit Abgriff 39, 40 den Antriebsmotor zur Verstellung des Schwenk-Neige-Kopfes, und 41 die Speisequelle.

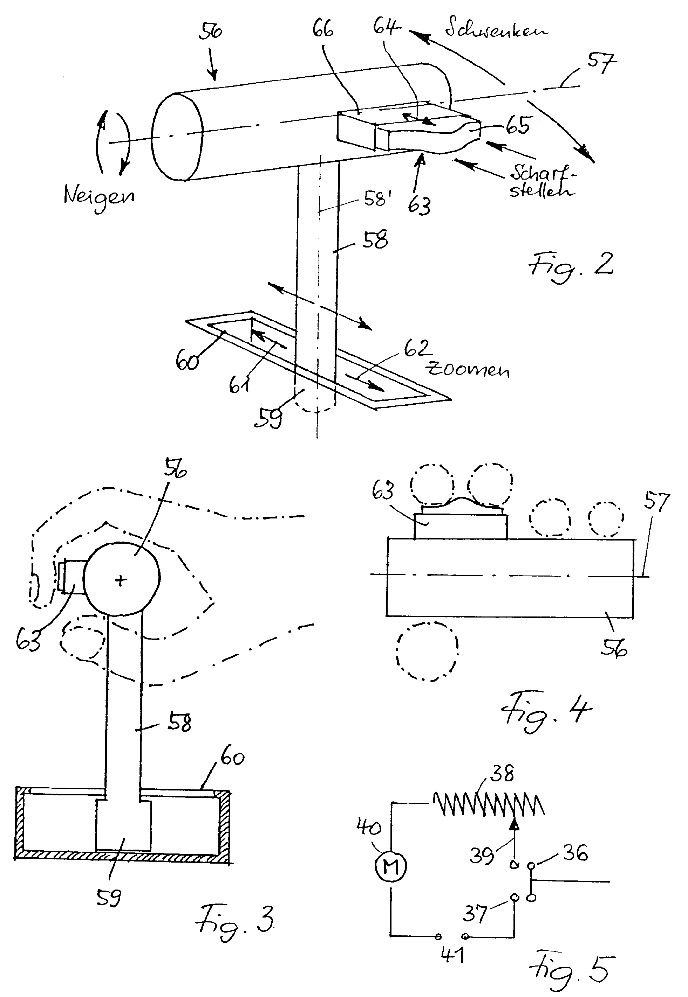

Figuren 2,3 und 4 zeigen anstelle des kugelförmigen Kopfes 42 nach Fig. 1 einen stabförmigen Handgriff 56 mit Mittellängsachse 57, der auf einem Schaft 58 - um die Längsachse 57 in begrenztem Ausmaß drehbar - festgelegt ist. Der Schaft 58 ist über einen Führungsschuh 59 in einer Führungsbahn 60 längsbeweglich angeordnet (Pfeile 61 und 62). Der Handgriff 56 weist an seinem Umfang einen Druckschalter 63 auf, der in Pfeilrichtung 64 betätigbar ist, derart, daß der bewegliche Teil 65 des Schalters 63 relativ zum feststehenden Teil 66, der starr am Handgriff 56 angeordnet ist, beweglich ist. Der Schalter 63 kann auch so ausgebildet sein, daß der bewegliche Teil 65 in einen linken und einen rechten Teil unterteilt ist, die beide unabhängig voneinander mit dem Zeigefinger und dem Mittelfinger betätigbar sind. Handgriff 56 und Vorderseite des Schalters 63 sind ergonomisch so ausgebildet, daß sie an den Griffflächen, die mit den Fingern der Betätigungshand in Eingriff stehen, entsprechend den Fingern gewölbt sind.

## Patentansprüche

1. Vorrichtung zum Steuern von Geräten, insbesondere für Kameras mit beweglichem S/N-Kopf und verstellbarem Objektiv, mit einem Bediengriff (42, 56), der
a) mit dem einen Ende eines Schaftes verbunden ist, dessen anderes Schaftende längs einer durch Führungsmittel festgelegten Führungsbahn aus einer Null-Position nach vorne und hinten verschiebbar ist, der
b) um eine senkrecht zur Längsachse des Schaftes und senkrecht zur Führungsbahn (50; 60) liegende Griffachse (46; 57) gegenüber dem Schaft schwenkbar ist, und der
c) Betätigungsmittel (55; 63) zur Steuerung mindestens einer Gerätefunktion aufweist,
wobei die Vorrichtung Mittel enthält, die die Bewegungen des Bediengriffes (42) in bewegungsproportionale und/oder auslenkungsproportionale Steuersignale zur Steuerung weiterer Gerätefunktionen umsetzen, und wobei alle Elemente der Steuervorrichtung so angeordnet sind, daß sie durch Einhandbedienung betätigbar sind,
**dadurch** **gekennzeichnet,** daß der Bediengriff (42; 56) um eine Achse (45; 58′) koaxial oder parallel zur Längsachse des Schaftes drehbar ist.

2. Vorrichtung nach Anspruch 1 zum Steuern von Kameras mit beweglichem S/N-Kopf und verstellbarem Objektiv, dadurch gekennzeichnet, daß die Führungsmittel (50; 60) eine Verschiebung des anderen Schaftendes zum Zoomen des Objektivs ergeben,
die Drehung des Bediengriffes (42; 56) koaxial oder parallel zur Längsachse des Schaftes ein Schwenken des S/N-Kopfes ergibt,
ein Schwenken des Bediengriffes um eine senkrecht zur Längsachse des Schaftes und senkrecht zur Führungsbahn liegende Achse ein Neigen des S/N-Kopfes ergibt,
mit den Betätigungsmitteln des Bediengriffes ein Scharfstellen des Objektivs erreicht wird.

3. Vorrichtung nach Anspruch 2, dadurch gekennzeichnet, daß der Bediengriff (42; 56) verschiebbar (51) in einer Ebene senkrecht zur Schaftlängsachse (45) angeordnet und so ausgebildet ist, daß die Geräteeinheit aus Kamera, Objektiv und Schwenk-Neige-Kopf in der Weise steuerbar ist, daß der Bediengriff analog der zu erzielenden Funktion der Geräteeinheit zum Heben und Senken des S/N-Kopfes um die senkrecht zur Schaftlängsachse angeordnete Griffachse (46) schwenkbar, zum Verstellen des S/N-Kopfes nach links und rechts um die Längsachse des Schaftes in Uhrzeigerrichtung oder in Gegenuhrzeigerrichtung drehbar, zum Verstellen des Objektivs in Richtung Tele und in Richtung Weitwinkel in der Führungsbahn linear verschiebbar, und zur Umschaltung von Zoomen auf Fokus mit Hilfe der Betätigungsmittel (55; 63) am Bediengriff (42; 56) steuerbar ausgebildet ist.

4. Vorrichtung nach einem der Ansprüche 1 - 3, dadurch gekennzeichnet, daß der Bediengriff ein Kugelkopf (42) ist, daß der Schaft (42) mit dem Kugelkopf in einer zur Achse des Schafts senkrechten Ebene verdrehbar (54) angeordnet ist, und daß Schaft und Kugelkopf miteinander in dieser Drehebene verschiebbar (51) angeordnet sind.

5. Vorrichtung nach Anspruch 4, dadurch gekennzeichnet, daß der Kugelkopf (42) eine schlitzförmige Aussparung (48) zur Aufnahme einer oberen Begrenzung des Schaftes (43) mit einer Lagerstelle (44) aufweist, daß das untere Ende des Schaftes in einer Schiebebahn (50) verschiebbar sowie drehbar gelagert ist, und daß die drehbare Lagerung von Kugelkopf (42) und Schaft (43) eine Drehplatte (52) ist, die in der Ebene einer festen Trägerplatte (53) angeordnet ist.

6. Vorrichtung nach Anspruch 1, zum Steuern von Kameras mit beweglichem S/N-Kopf und verstellbarem Objektiv, dadurch gekennzeichnet, daß der Bediengriff ein stabförmiger drehbarer Handgriff (56) ist, an dessen Griffumfang ein in radialer Richtung betätigbarer Druckschalter (63) angeordnet ist, daß der Drehgriff zum Neigen der Kamera um seine Längsachse (57) drehbar, zum Schwenken der Kamera um die Schaftachse (58′) drehbar, zum Zoomen des Objektivs in einer geradlinigen Führungsbahn (60) horizontal verschiebbar, und zum Scharfstellen des Objektivs bei stationär gehaltenem Drehgriff der Druckschalter (63) mit Zeigefinger und/oder Mittelfinger in Richtung zum Drehgriff (Pfeil 64) betätigbar ist.

7. Vorrichtung nach einem der Ansprüche 1 - 6, dadurch gekennzeichnet, daß die Bewegungen des Bediengriffes über Potentiometer (38) erfaßbar sind, derart, daß das Ausmaß der Hebelauslenkung proportional der Winkelbewegung bzw. Winkelgeschwindigkeit des S/N-Kopfes ist.

8. Vorrichtung nach einem der Ansprüche 1 - 7, dadurch gekennzeichnet, daß der Steuerhebel bei seiner Auslenkung aus der Nullstellung durch Federrückstellung automatisch in die Nullstellung zurückführbar ist.

## Claims

1. Device for controlling apparatuses, especially for cameras with movable S/N-head and adjustable objective, with a control knob (42, 56), which
a) is connected with the one end of a shaft the other end of which is movable along a guide track positioned by guide means from a zero position forwards and back-wards,
b) is pivotable around a knob axis (46; 57) in view of said shaft, said knob axis being arranged rectangular to the longitudinal axis of the shaft and rectangular to the guide track (50; 60), and
c) is provided with operating means (55; 63) for controlling at least one apparatus function,
whereby the device includes means for transforming the movements of the control knob (42) into movement-proportional and/or deflection-proportional control signals for controlling further apparatus functions, and whereby all elements of the control device are arranged so that they can be operated by one hand,
**characterised** **in** that said control knob (42; 56) is rotatable around an axis (45; 58′) coaxial or parallel to the longitudinal axis of the shaft.

2. Device according to claim 1 for controlling cameras with movable S/N-head and adjustable objective, characterised in that said guide means (50; 60) result in moving the other shaft end for zooming the objective,
rotating the control knob (42; 56) coaxial or parallel to the longitudinal axis of the shaft results in pivoting the S/N-head,
pivoting the control knob around an axis rectangular to the longitudinal axis of the shaft and rectangular to the guide track results in tilting the S/N-head,
actuating the operating means of the control knob results in focussing of the objective.

3. Device according to claim 2, characterised in that the control knob (42; 56) is arranged movable (51) within a plane rectangular to the longitudinal axis (45) of the shaft and is formed in such a manner that the apparatus unit including the camera, the objective and the pivot-tilt-head is controllable in such a manner that the control knob is pivotable analog to the required function of the apparatus unit for lifting and lowering the S/N head around the knob axis (46) arranged rectangular to the longitudinal axis of the shaft, is rotatable around the longitudinal axis of the shaft clockwise or counterclockwise for adjusting the S/N head to the left and to the right, is linearily movable within the guide track for adjusting the ojective towards tele and towards wide-angle, and is controllable at the control knob (42; 56) for switching over from zooming to focussing by said operating means (55; 63).

4. Device according to one of claims 1 - 3, characterised in that said control knob is a ball head (42), that the shaft (42) is rotatably (54) arranged within a plane rectangular to the axis of the shaft, and that shaft and ball head are movable (51) together within said rotational plane.

5. Device according to claim 4, characterised in that said ball head (42) is provided with a slot-like recession (48) for taking up an upper restriction of the shaft (43) together with a bearing (44), that the lower end of the shaft is movably and rotatably supported within a guide track (50), and that the rotatable bearing of ball head (42) and shaft (43) is a rotatable plate (52) arranged within the plane of a stationary support plate (53).

6. Device according to claim 1 for controlling cameras with movable S/N-head and adjustable objective, characterised in that the control knob is a rod-like rotatable handle (56), at the periphery of which a pressure switch (63) is arranged which can be actuated in radial direction, that the rotational knob for tilting the camera around the longitudinal axis (57) is rotatable, for pivoting the camera around the shaft axis (58′) is rotatable, for zooming the objective in a straight-line guide track (60) is movable horizontally, and for focussing the objective with the stationary rotational knob of the pressure switch (63) is operable by means of the fore-finger (63) and/or the middle-finger towards the rotational knob (arrow 64).

7. Device according to any one of claims 1 - 6 , characterised in that the movements of the control knob are controllable by means of a potentiometer (38) in such a manner that the extent of the lever deflection is proportional to the angular movement or the angular speed of the S/N-head.

8. Device according to one of claims 1 - 7, characterised in that the control lever when being deflected from its zero position automatically is returned to the zero position by a return spring.

## Revendications

1. Dispositif pour la commande d'appareils, en particulier pour caméras à tête pivotante et inclinable et objectif réglable, comprenant une manette de commande (42 ; 56), qui
a) est reliée à une extrémité d'un arbre, dont l'autre extrémité peut coulisser vers l'avant et vers l'arrière à partir d'une position d'origine le long d'une glissière de guidage fixée par des moyens de guidage, qui
b) peut pivoter par rapport à l'arbre autour d'un axe de manette (46 ; 57) disposé perpendiculairement à l'axe longitudinal de l'arbre et perpendiculairement à la glissière de guidage (50 ; 60), et qui
c) présente des moyens d'actionnement (55 ; 63) pour la commande d'au moins une fonction d'appareil, le dispositif contenant des moyens qui transforment les mouvements de la manette de commande (42) en signaux de commande proportionnels au mouvement et/ou proportionnels à l'excursion pour la commande d'autres fonctions d'appareil, et tous les éléments du dispositif de commande étant agencés de telle sorte qu'ils peuvent être actionnés au moyen d'une seule main, caractérisé en ce que la manette de commande (42 ; 56) peut tourner autour d'un axe (45 ; 58′) coaxialement ou parallèlement à l'axe longitudinal de l'arbre.

2. Dispositif selon la revendication 1, pour la commande de caméras à tête pivotante et inclinable et objectif réglable, caractérisé en ce que les moyens de guidage (50 ; 60) produisent un coulissement de l'autre extrémité de l'arbre pour faire zoomer l'objectif,
la rotation de la manette de commande (42 ; 56) coaxialement ou parallèlement à l'axe longitudinal de l'arbre produit un pivotement de la tête pivotante et inclinable, un pivotement de la manette de commande autour d'un axe disposé perpendiculairement à l'axe longitudinal de l'arbre et perpendiculairement à la glissière de guidage produit une inclinaison de la tête pivotante et inclinable,
on obtient grâce aux moyens d'actionnement de la manette de commande une mise au point de l'objectif.

3. Dispositif selon la revendication 2, caractérisé en ce que la manette de commande (42 ; 56) est disposée de façon coulissante (51) dans un plan perpendiculaire à l'axe longitudinal (45) de l'arbre et conçue de telle sorte que l'unité d'appareil comprenant caméra, objectif et tête pivotante et inclinable peut être commandée de telle façon que la manette de commande, de façon analogue à la fonction de l'unité d'appareil à obtenir, peut pivoter autour de l'axe de manette (46) disposé perpendiculairement à l'axe longitudinal de l'arbre pour faire monter et descendre la tête pivotante et inclinable, peut tourner autour de l'axe longitudinal de l'arbre dans le sens horaire ou dans le sens anti-horaire pour déplacer la tête pivotante et inclinable vers la droite et vers la gauche, peut coulisser de façon rectiligne dans la glissière de guidage pour déplacer l'objectif dans la direction télé et dans la direction grand angle, et est conçue de façon commandable au niveau de la manette de commande (42 ; 56) pour commuter du zoom vers la mise au point à l'aide des moyens d'actionnement (55; 63).

4. Dispositif selon l'une des revendication 1 à 3, caractérisé en ce que la manette de commande est une tête sphérique (42), en ce que l'arbre (43) est disposé de façon pivotante (54) avec la tête sphérique dans un plan perpendiculaire à l'axe de l'arbre, et en ce que l'arbre et la tête sphérique sont disposés de façon coulissante (51) l'un avec l'autre dans ce plan de pivotement.

5. Dispositif selon la revendication 4, caractérisé en ce que la tête sphérique (42) présente un évidement (48) réalisé sous la forme d'une fente pour recevoir une portion supérieure de l'arbre (43) comprenant un point de fixation (44), en ce que l'extrémité inférieure de l'arbre est logée de façon coulissante ainsi que pivotante dans une glissière de guidage (50), et en ce que le logement pivotant de la tête sphérique (42) et de l'arbre (43) est un plateau pivotant (52) qui est disposé dans le plan d'un plateau de support (53) fixe.

6. Dispositif selon la revendication 1, pour la commande de caméras à tête pivotante et inclinable mobile et objectif réglable, caractérisé en ce que la manette de commande est une manette (56) pivotante en forme de barre, sur la périphérie de laquelle est disposé un interrupteur à pression (63) pouvant être actionné dans la direction radiale, en ce que la manette pivotante peut pivoter autour de son axe longitudinal (57) pour incliner la caméra, peut pivoter autour de l'axe (58′) de l'arbre pour faire pivoter la caméra, peut coulisser horizontalement dans un glissière de guidage rectiligne (60) pour faire zommer l'objectif et, la manette pivotante étant maintenue immobile, l'interrupteur à pression (63) peut être actionné à l'aide de l'index et/ou du majeur en direction de la manette pivotante (flèche 64) pour la mise au point de l'objectif.

7. Dispositif selon l'une des revendications 1 à 6, caractérisé en ce que les mouvements de la manette de commande peuvent être détectés par un potentiomètre (38), de sorte que l'étendue de l'excursion du levier est proportionnelle au mouvement angulaire ou à la vitesse angulaire de la tête pivotante et inclinable.

8. Dispositif selon l'une des revendications 1 à 7, caractérisé en ce que le levier de commande, lors de son excursion à partir de sa position d'origine, peut être ramené automatiquement par rappel à sa position d'origine.
